# EUROPÄISCHE PATENTSCHRIFT

(11) **EP 1 623 771 B1**
(45) Veröffentlichungstag und Bekanntmachung des Hinweises auf die Patenterteilung: **11.02.2009**
(21) Anmeldenummer: 05015389.9
(22) Anmeldetag: 15.07.2005
(51) Int. Cl.: B21C 23/12, B21C 23/22, B21C 37/15, B21C 37/06, B23P 11/02

(54) **Verfahren zur Herstellung eines hybriden Rohres**
Method of manufacturing a compound tube
Procédé pour la fabrication d'un tuyau composite

(30) Priorität: 05.08.2004 DE 102004038138
(43) Veröffentlichungstag der Anmeldung: 08.02.2006
(73) Patentinhaber: AUDI AG, 85045 Ingolstadt (DE)
(72) Erfinder: Haffner, Peter, 32683 Barntrup (DE); Kruse, Martin, 68789 St. Leon-Rot (DE)
(74) Vertreter: Patzelt, Heike Anna Maria

(56) Entgegenhaltungen:
- DE-A1- 3 512 501
- US-A- 1 916 645
- US-A- 3 646 799
- PATENT ABSTRACTS OF JAPAN Bd. 013, Nr. 310 (M-850), 14. Juli 1989 (1989-07-14) & JP 01 099725 A (DAI ICHI HIGH FREQUENCY CO LTD), 18. April 1989 (1989-04-18)

## Beschreibung

Die vorliegende Erfindung bezieht sich auf ein Verfahren zur Herstellung eines hybriden Rohres.

Ein solches Verfahren ist aus der DE-A-3512501 bekannt.

Obwohl auf beliebige hybride Maschinenteile anwendbar, werden die vorliegende Erfindung sowie die ihr zugrunde liegende Problematik in Bezug auf ein Rohr näher erläutert, welches in einer Kraftfahrzeugkarosserie zur Erhöhung der Steifigkeit verwendet wird.

Unter den unterschiedlichen Verfahren zur Herstellung eines derartigen Rohres ist das Strangpressverfahren aus Fertigungs- und Kostengründen vorteilhaft.

Seit kurzem werden in verschiedenen Typen von Kraftfahrzeugen, wie gebräuchlichen Automobilen, Lastkraftwagen und dergleichen, Komponenten wie das Chassis, Fahrzeug-Hauptrahmen, Stoßstangen und dergleichen, die aus Aluminium oder einer Aluminium-Legierung gebildet sind, in einem weit verbreiteten Maß anstelle von Teilen verwendet, die herkömmlicher Weise aus Eisen gebildet sind, weil Aluminium-Chassis, etc. wünschenswert sind, insbesondere hinsichtlich einer Verringerung des Gewichts des Fahrzeug-Hauptrahmens, was die Wartungsdauer von Fahrzeugen und Betrachtungen hinsichtlich des Recyclings, etc. verlängert.

Bei der Herstellung von diesen Typen von Fahrzeugkomponenten wird gewöhnlicher Weise in der Praxis ein Extrusions-Prozess verwendet. Der Grund dafür ist, dass der Schmelzpunkt von Aluminium, das als ein Rohmaterial verwendet wird, niedrig ist. In einem derartigen Extrusionsprozess wird ein Extrusions-Matrizensatz mit einem Lochabschnitt, der eine im Querschnitt ähnliche Konfiguration zu derjenigen der Fahrzeugkomponenten aufweist, fest an einem distalen Endabschnitt eines Behälters befestigt, ein erwärmtes Material (Billet oder Rohmaterial) wird in das Innere des Behälters eingefügt und dann wird das Rohmaterial in Richtung auf die Extrusions-Matrizensatzseite hingedrückt, so dass das erstere aus dem Lochabschnitt herausextrudiert wird, wodurch die voranstehend erwähnten Fahrzeugkomponenten gebildet werden. Da gemäß dieser Extrusionsprozedur der Lochabschnitt des Extrusions-Matrizensatzes eine konstante Querschnittsform aufweist, weisen die Fahrzeugkomponenten, die so erhalten werden, jeweils eine konstante Querschnittsform in der Längsrichtung auf.

Im Kraftfahrzeugbereich besteht somit allgemein die Problematik, dass in bestimmten Bereichen, beispielsweise der A-Säule, Rohre mit einer hohen Steifigkeit, wie beispielsweise Stahlrohre, verwendet werden müssen. Allerdings lassen sich diese Stahlrohre nicht oder zumindest schlecht an die Aluminium-Karosserie des Kraftfahrzeuges mittels einer Schweißverbindung anbringen, da Stahl und Aluminium nicht oder schwer miteinander verschweißbar sind. Auch im Falle einer Ausbildung eines Aluminium-Rohrs mit einer Wandstärke von etwa 10 cm treten derartigen Verschweißungsprobleme auf.

Daher existiert gemäß dem Stand der Technik der Ansatz, ein Stahlrohr mit einer hohen Steifigkeit mit einem Aluminium-Profil zu umgeben, wobei das Stahlrohr in geradem Zustand in ein vorbestimmtes Aluminium-Profil eingeschoben wird. Anschließend erfolgt, falls erforderlich, ein Biegeprozess des hybriden Rohres, wobei sich eine Aufweitung des Profils mittels Innenhochdruckumformung anschließen kann.

Gemäß dem Stand der Technik hat sich jedoch die Tatsache als nachteilig herausgestellt, dass ein zusätzlicher Biegeprozess und eine Aufweitung mittels einer Innenhochdruckumformung aufwändige und kostspielige Verfahren darstellen, welche die Gesamtkosten des Herstellungsverfahrens des hybriden Rohres nachteilig erhöhen.

Somit liegt der vorliegenden Erfindung die Aufgabe zugrunde, ein Herstellungsverfahren für ein hybrides Rohr zu schaffen, wodurch die oben genannten Nachteile beseitigt werden und insbesondere ein einfacheres und kostengünstigeres Verfahren gewährleistet wird, mit welchem ein hybrides Rohr mit einer hohen Festigkeit hergestellt und mittels einer Schweißverbindung mit der Karosserie verschweißt werden kann.

Erfindungsgemäß wird diese Aufgabe verfahrensseitig durch ein Verfahren mit den Merkmalen des Patentanspruchs 1 gelöst.

Die der vorliegenden Erfindung zugrunde liegende Idee besteht darin, dass das Verfahren zur Herstellung eines hybriden Rohres bestehend aus mindestens einem Innenrohr aus einem ersten Material und mindestens einem Außenrohr aus einem zweiten Material folgende Verfahrensschritte aufweist: Herstellen des mindestens einen Innenrohrs mit einem vorbestimmten Profil in einem eine hohe Steifigkeit aufweisenden Zustand; Herstellen des mindestens einen Außenrohrs mittels eines Strangpressverfahrens mit einem dem vorbestimmten Profil des mindestens einen Innenrohrs angepassten Profil in einem leicht deformierbaren, nicht ausgehärteten Zustand; Einsetzen des mindestens einen steifen Innenrohrs in das stranggepresste, nicht ausgehärtete Außenrohr mittels eines mit dem Strangpressverfahren integrierten Verfahrensschritts; und Aushärten des mindestens einen Außenrohrs für eine Verkleinerung der Abmessungen des mindestens einen Außenrohrs zum kraftschlüssigen Pressverbinden des mindestens einen Außenrohrs und des mindestens einen Innenrohrs miteinander.

Somit weist die vorliegende Erfindung gegenüber den bekannten Ansätzen gemäß dem Stand der Technik den Vorteil auf, dass durch das Einsetzen des steifen Innenrohrs in das noch nicht ausgehärtete Außenrohr während des Strangpressverfahrens, beispielsweise durch ein direktes Extrudieren des mindestens einen Außenrohrs über das mindestens eine Innenrohr, und durch das anschließende Aushärten durch Abkühlen des mindestens einen Außenrohrs eine kraftschlüssige Pressverbindung des mindestens einen Außenrohrs und des mindestens einen Innenrohrs miteinander auf einfache Weise gewährleistet wird, ohne dass eine Verpressung durch Aufweitung des Innenrohrs mittels beispielsweise eines Innenhochdruckumformungsverfahrens bewerkstelligt werden muss. Somit ist das vorliegende Verfahren mit einem geringeren Verfahrensaufwand und mit geringeren Herstellungskosten verbunden.

Ferner weist die vorliegende Erfindung den Vorteil auf, dass ein Verbiegen des mindestens einen Innenrohrs vor einer Verpressung mit dem mindestens einen Außenrohr erfolgen kann, da das mindestens eine Außenrohr im noch nicht ausgehärteten Zustand auch auf einfache Weise auf ein gebogenes Innenrohr aufschiebbar ist. Somit können umständliche und möglicher Weise eine Beschädigung, beispielsweise Rissbildungen bzw. Brüche, verursachende Biegeprozesse nach einem Verpressen der beiden Rohre verhindert werden.

In den Unteransprüchen finden sich vorteilhafte Ausgestaltungen und Verbesserungen des im Anspruch 1 angegebenen Verfahrens.

Gemäß einer bevorzugten Weiterbildung wird das mindestens eine Innenrohr aus Stahl hergestellt. Dadurch weist das gesamte hybride Rohr eine hohe mechanische Steifigkeit für eine Verwendung im Karosseriebereich eines Kraftfahrzeuges auf. Das mindestens eine Außenrohr wird dagegen vorzugsweise aus Aluminium oder einer Aluminium-Legierung stranggepresst. Vorzugsweise wird das mindestens eine Außenrohr mit einem Anschlussflansch oder einem zugeordneten Karosserieabschnitt eines Kraftfahrzeuges fest verschweißt. Da sowohl der Anschlussflansch und/oder der zugeordnete Karosserieabschnitt ebenfalls im allgemeinen aus Aluminium besteht, wird eine einfache Verschweißung des hybriden Rohres über das aus Aluminium hergestellte Außenrohr bzw. über den angeflanschten Anschlussflansch mit dem zugeordneten Karosserieabschnitt bzw. dem zugeordneten Anschlussflansch gewährleistet. Dadurch entsteht auf einfache Weise eine stabile und dauerhafte Schweißverbindung zwischen der Karosserie und dem hybriden Rohr.

Gemäß einer weiteren bevorzugten Weiterbildung wird das mindestens eine Außenrohr mit einem Querschnittsprofil hergestellt, welches zum Gewährleisten eines Einsetzens des mindestens einen Innenrohrs in das mindestens eine Außenrohr etwas größere Abmessungen aufweist als das Querschnittsprofil des mindestens einen Innenrohrs. Dabei werden vorzugsweise die Querschnittsprofile des mindestens einen Innenrohrs und des mindestens einen Außenrohrs derart aufeinander abgestimmt, dass durch Aushärten des mindestens einen Außenrohrs eine kraftschlüssige Pressverbindung desselben mit dem mindestens einen Innenrohr aufgrund einer Verkleinerung der Abmessungen des Außenrohrs bewerkstelligt wird.

Gemäß einem weiteren bevorzugten Ausführungsbeispiel wird das mindestens eine Innenrohr in das mindestens eine Außenrohr eingesetzt, während sich das mindestens eine Außenrohr noch im teigigen Zustand befindet. Dadurch kann das Innenrohr auch gebogen von dem Material für das mindestens eine Außenrohr auf einfache Weise umgeben werden, da dieses im teigigen Zustand leicht deformierbar und verformbar ist.

Vorteilhaft wird das mindestens eine Außenrohr dadurch ausgehärtet, dass es von der hohen Fertigungstemperatur während des Strangpressverfahrens auf beispielsweise Zimmertemperatur abgekühlt wird. Aufgrund des temperaturabhängigen Ausdehnungskoeffizienten von Aluminium zieht sich das aus Aluminium bestehende Außenrohr bei dieser Abkühlung derart zusammen, dass es eine Pressverbindung mit dem umgebenden Innenrohr gewährleistet.

Vorzugsweise wird das mindestens eine Außenrohr vorzugsweise noch während des teigigen Zustands, d.h. bevor es ausgehärtet wird, auf eine vorbestimmte Länge auf einfache Weise abgelängt bzw. abgeschnitten.

Gemäß einem weiteren bevorzugten Ausführungsbeispiel wird das mindestens eine Innenrohr vor einem Einsetzen in das mindestens eine Außenrohr bereits in eine vorbestimmte Form vorgebogen. Alternativ kann das mindestens eine in Richtung auch nach einem Einsetzen desselben in das mindestens eine Außenrohr zusammen mit dem Außenrohr in eine vorbestimmte Form gebogen werden.

Das mindestens eine Innenrohr wird vorzugsweise vor einem Einsetzen desselben in das mindestens eine Außenrohr auf eine vorbestimmte Temperatur vorgewärmt, so dass der teigige Zustand des das Innenrohr umgebende Außenrohr über einen längeren Zeitraum beibehalten wird.

Vorteilhaft wird das mindestens eine Außenrohr durch das Strangpressverfahren direkt über das mindestens eine Innenrohr extrudiert. Dabei wird das mindestens eine Innenrohr mit einer hohen Steifigkeit mittels einer geeigneten Halteeinrichtung vor den Ausgang bzw. die Matrize des Extruders geführt.

Die Erfindung wird im folgenden anhand von Ausführungsbeispielen unter Bezugnahme auf die beiliegenden Figuren der Zeichnung näher erläutert. Von den Figuren zeigen:
- Figur 1a: eine schematische Seitenquerschnittsansicht eines Extrusionsvorgangs in einem ersten Zustand;
- Figur 1b: eine schematische Seitenquerschnittsansicht eines Extrusionsvorgangs in einem zweiten Zustand;
- Figur 1c: eine schematische Seitenquerschnittsansicht eines Extrusionsvorgangs in einem dritten Zustand; und
- Figur 2: eine schematische Seitenquerschnittsansicht eines Herstellungsschrittes zur Herstellung eines Hybridrohres gemäß einem Ausführungsbeispiel der vorliegenden Erfindung.

In den Figuren der Zeichnung bezeichnen gleiche Bezugszeigen gleiche oder funktionsgleiche Komponenten, soweit nichts Gegenteiliges angegeben ist.

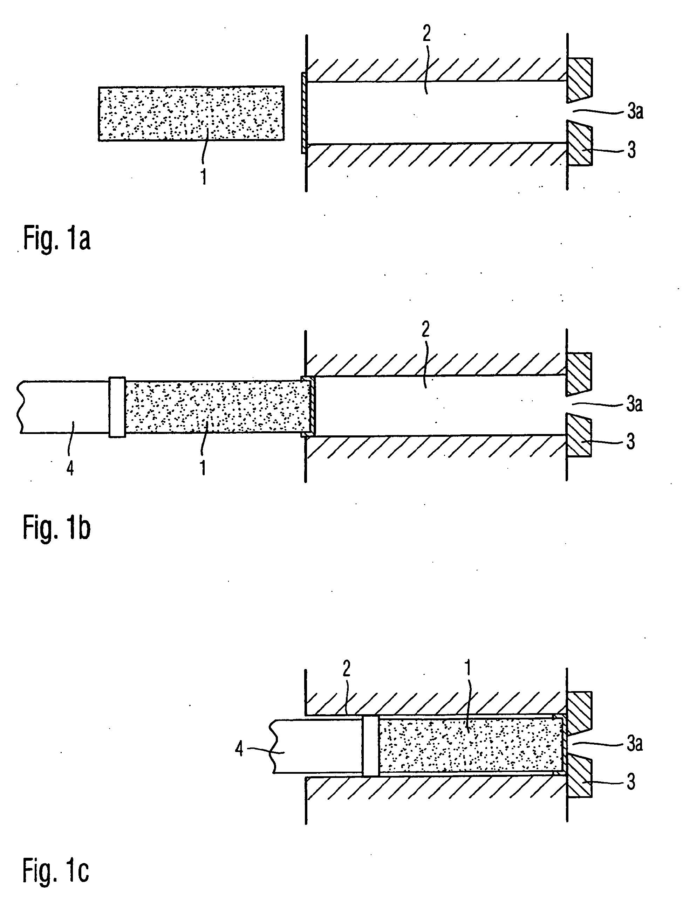

Bei dem in den Figuren 1a bis 1c dargestellten Strangpressvorgang sind in bekannter Weise die Schritte des Einbringens eines Rohlings 1 aus beispielsweise Aluminium oder einer Aluminium-Legierung in einen Aufnehmer 2 in einer schematischen Seitenquerschnittsansicht exemplarisch dargestellt.

Der Aufnehmer 2 weist an seinem einen Ende eine Strangpressmatrize 3 mit einer Öffnung 3a auf. Ein Stempel 4 bzw. ein Kolben 4 bewegt sich in den Aufnehmer 2, um den Rohling 1 gegen die Matrize 3 zu drücken. Dabei wird der Rohling 1 durch die Öffnung 3a der Matrize 3 hindurchgedrückt und erzeugt ein profiliertes Werkstück, beispielsweise ein Werkstück mit einem rohrförmigen Querschnitt, aus Aluminium oder einer Aluminium-Legierung. Das Werkstück weist dabei einen Querschnitt auf, der dem Querschnitt der Matrizenöffnung 3a entspricht.

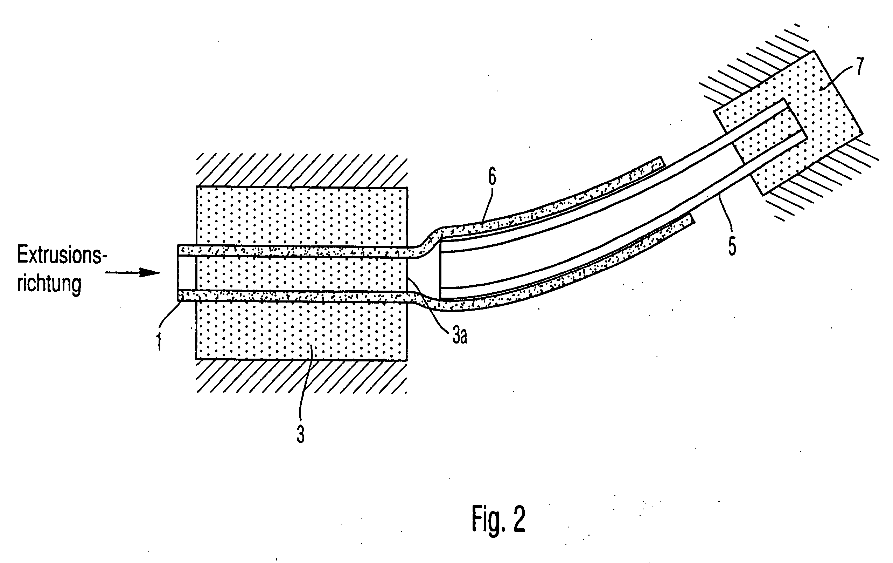

Figur 2 illustriert eine schematische Darstellung eines erfindungsgemäßen Herstellungsverfahrens eines Hybridrohres gemäß einem Ausführungsbeispiel der vorliegenden Erfindung. Wie in Figur 2 ersichtlich ist, wird ein Innenrohr 5, vorzugsweise aus Stahl oder dergleichen, mit einem vorbestimmten Profil, vorbestimmten Innenradien und vorbestimmten Außenradien gefertigt und vorzugsweise bereits in die gewünschte Form vorgebogen. Das Innenrohr 5 wird beispielsweise mittels einer Halteeinrichtung 7 in der entsprechenden Prozesskammer vorzugsweise vor die Öffnung 3a der Strangpressmatrize 3 gehalten.

Wie ferner in Figur 2 ersichtlich ist, wird das vorgefertigte Innenrohr 5 vorzugsweise nahe der Öffnung 3a der Strangpressmatrize 3 derart angeordnet, dass eine Einlagerung des Innenrohrs 5 direkt im Strangpressprozess erfolgt. Dabei wird das aus der Strangpressmatrize 3 durch die Öffnung 3a gepresste Profil des Außenrohrs 6 vorzugsweise noch im teigigen Zustand über das Innenrohr 5 geschoben bzw. vorzugsweise direkt über das Innenrohr 5 extrudiert. Beim Verlassen des Aluminium-Materials 1 durch die Öffnung 3a der Strangpressmatrize 3 weist dieses eine Temperatur von etwa 500°C auf. In dem bei dieser Temperatur vorliegenden teigigen Zustand ist das extrudierte Außenrohr 6 leicht deformierbar, so dass das extrudierte Außenrohr 6 nach Verlassen der Strangpressmatrize 3 auf einfache Weise über dem Innenrohr 5 extrudiert werden kann, wie in Figur 2 dargestellt ist.

Anschließend erfolgt vorzugsweise ebenfalls im noch teigigen Zustand des Außenrohrs 6 ein Ablängen bzw. Abschneiden des Außenrohrs 6 auf eine vorbestimmte Länge mittels einer geeigneten Schneideeinrichtung (nicht dargestellt).

Bei den vorgenannten Verfahrensschritten kann das Innenrohr 5 in vorteilhafter Weise auf eine geeignete Temperatur vorgewärmt werden, damit sich das das Außenrohr 6 bildende Material bei dem Aufschieben auf das Innenrohr 5 sowie bei der Ablängung im noch vorteilhaften teigigen Zustand befindet.

Schließlich wird das hybride Rohr, bestehend aus dem Innenrohr 5 und dem Außenrohr 6, auf eine vorbestimmte Temperatur abgekühlt, wodurch das Material des Außenrohrs 6 ausgehärtet wird. Da im vorliegenden Fall Aluminium oder eine Aluminium-Legierung als Material für das Außenrohr 6 verwendet wird, welches einen relativ hohen temperaturabhängigen Ausdehnungskoeffizienten aufweist, erfolgt eine temperaturabhängige Schrumpfung, d.h. eine Verkleinerung der Abmessungen des Außenrohrs 6, durch eine derartige Abkühlung. Die Temperaturen und die Abmessungen des Innenrohrs 5 sowie des Außenrohrs 6 sind dabei vorzugsweise derart gewählt, dass es bei einem Erkalten des Außenrohrs 6 zu einer kraftschlüssigen Verpressung zwischen dem Innenrohr 5 und dem Außenrohr 6 aufgrund des Sich-Zusammenziehens des Materials des Außenrohrs 6 kommt.

Somit schafft die vorliegende Erfindung ein Verfahren, mittels welchem auf einfache Weise ein aus beispielsweise einem Stahlrohr 5 und einem Aluminium-Rohr 6 bestehendes hybrides Rohr mit einem vorbestimmten Profil und einer vorbestimmte Biegeform gewährleistet wird, ohne dass eine aufwändige Innenhochdruckumformung notwendig ist.

Ferner können durch das Vorbiegen des Innenrohrs 5 Beschädigungen des hybriden Rohrs verhindert werden, im Unterschied zu den Ansätzen gemäß dem Stand der Technik.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Beispielsweise kann ein zunächst gerades Innenrohr 5 verwendet werden, über welchem das Außenrohr 6 direkt extrudiert und anschließend zusammen mit dem Innenrohr 5 in die vorbestimmte Form gebogen wird. Auch hierbei wird eine Verbiegung des bereits ausgehärteten Hybridrohres vorteilhaft verhindert.

Ferner können beliebige Profilformen und Ouerschnittsformen für das Hybridrohr vorgesehen werden. Aufgrund der direkten Extrudierung des Aluminium-Extrudats in noch teigigem Zustand kann dieses in die vorbestimmten Profilquerschnitte und Längsprofile geformt und an das Innenrohr 5 angepasst werden. Bezugszeichenliste
- 1: Rohling
- 2: Aufnehmer
- 3: Strangpressmatrize
- 3a: Öffnung der Strangpressmatrize
- 4: Stempel
- 5: Innenrohr/Stahlrohr
- 6: Außenrohr/Aluminium-Rohr
- 7: Halteeinrichtung

## Patentansprüche

1. Verfahren zur Herstellung eines hybriden Rohres (5, 6) bestehend aus mindestens einem Innenrohr (5) aus einem ersten Material und mindestens einem Außenrohr (6) aus einem zweiten Material mit folgenden Verfahrensschritten: Herstellen des mindestens einen Innenrohrs (5) mit einem vorbestimmten Profil in einem eine hohe Steifigkeit aufweisenden Zustand;
Herstellen des mindestens einen Außenrohrs (6) mittels eines Strangpressverfahrens mit einem dem vorbestimmten Profil des mindestens einen Innenrohrs (5) angepassten Profil in einem leicht deformierbaren, nicht ausgehärteten Zustand;
Ummanteln des mindestens einen steifen Innenrohrs (5) durch das mindestens eine stranggepresste, nicht ausgehärtete Außenrohr (6) mittels eines mit dem Strangpressverfahren integrierten Verfahrensschritts; und Aushärten des mindestens einen Außenrohrs (6) für eine Verkleinerung der Abmessungen des mindestens einen Außenrohrs (6) zum kraftschlüssigen Pressverbinden desselben mit dem mindestens einen Innenrohr (5).

2. Verfahren nach Anspruch 1,
**dadurch gekennzeichnet,**
**dass** das mindestens eine Innenrohr (5) aus Stahl oder dergleichen hergestellt wird.

3. Verfahren nach Anspruch 1 oder 2,
**dadurch gekennzeichnet,**
**dass** das mindestens eine Außenrohr (6) aus Aluminium, einer Aluminium-Legierung, oder dergleichen stranggepresst wird.

4. Verfahren nach wenigstens einem der vorhergehenden Ansprüche,
**dadurch gekennzeichnet,**
**dass** das mindestens eine Außenrohr (6) mit einem Querschnittsprofil hergestellt wird, welches zum Gewährleisten eines Einsetzens des mindestens einen Innenrohrs (5) in das mindestens eine Außenrohr (6) derart geeignete Abmessungen aufweist, dass durch Aushärten des mindestens einen Außenrohrs (6) eine kraftschlüssige Pressverbindung desselben mit dem mindestens einen Innenrohr (5) bewerkstelligt wird.

5. Verfahren nach wenigstens einem der vorhergehenden Ansprüche,
**dadurch gekennzeichnet,**
**dass** das mindestens eine Innenrohr (5) in das mindestens eine Außenrohr (6) eingesetzt wird, während sich das mindestens eine Außenrohr (6) noch im teigigen Zustand befindet.

6. Verfahren nach wenigstens einem der vorhergehenden Ansprüche,
**dadurch gekennzeichnet,**
**dass** das mindestens eine Außenrohr (6) durch Erkalten für eine Verkleinerung der Abmessungen desselben zum kraftschlüssigen Pressverbinden mit dem mindestens einen Innenrohr (5) ausgehärtet wird.

7. Verfahren nach wenigstens einem der vorhergehenden Ansprüche,
**dadurch gekennzeichnet,**
**dass** das mindestens eine Außenrohr (6) noch im teigigen Zustand auf eine vorbestimmte Länge abgelängt wird.

8. Verfahren nach wenigstens einem der vorhergehenden Ansprüche,
**dadurch gekennzeichnet,**
**dass** das mindestens eine Innenrohr (5) vor einer Ummantelung durch das mindestens eine Außenrohr (6) bereits in eine vorbestimmte Form vorgebogen wird.

9. Verfahren nach wenigstens einem der vorhergehenden Ansprüche 1 bis 7,
**dadurch gekennzeichnet,**
**dass** das mindestens eine Innenrohr (5) nach einer Ummantelung desselben durch das mindestens eine Außenrohr (6) zusammen mit dem Außenrohr (6) in eine vorbestimmte Form gebogen wird, während sich das mindestens eine Außenrohr (6) noch im teigigen Zustand befindet.

10. Verfahren nach wenigstens einem der vorhergehenden Ansprüche,
**dadurch gekennzeichnet,**
**dass** das mindestens eine Außenrohr (6) mit einem Anschlussflansch und/oder einem zugeordneten Karosserieabschnitt eines Kraftfahrzeuges fest verschweißt wird.

11. Verfahren nach wenigstens einem der vorhergehenden Ansprüche,
**dadurch gekennzeichnet,**
**dass** das mindestens eine Innenrohr (5) vor einer Ummantelung durch das mindestens eine Außenrohr (6) auf eine vorbestimmte Temperatur vorgewärmt wird.

12. Verfahren nach wenigstens einem der vorhergehenden Ansprüche
**dadurch gekennzeichnet,**
**dass** das mindestens eine Außenrohr (6) direkt über das mindestens eine Innenrohr (5) extrudiert wird.

## Claims

1. Process for producing a hybrid tube (5, 6) comprising at least one inner tube (5), made of a first material, and at least one outer tube (6), made of a second material, and comprising the following stages:
Production of at least one outer tube (6), in an easily deformed, unhardened state, by means of an extrusion process using a form, that is adapted to the set form of the at least one inner tube (5);
casing of the at least one rigid inner tube (5) by means of the at least one extruded, unhardened, outer tube (6) by means of a stage, in the process, that is integrated with the extrusion process; and hardening of the at least one outer tube (6) in order to reduce the dimensions of the at least one outer tube (6) in order to give a friction pressure connection of the outer tube (6) with the at least one inner tube (5).

2. Process in accordance with claim 1,
**characterized in that**
the at least one inner tube (5) is made of steel or suchlike material.

3. Process in accordance with claims 1 or 2,
**characterized in that**
the at least one outer tube (6) is made of extruded aluminium, aluminium alloy or suchlike material.

4. Process in accordance with at least on of the above claims,
**characterized in that**
the at least one outer tube (6) is produced giving it a certain cross-sectional form that is dimensioned so as to ensure insertion of the at least one inner tube (5) into the at least one outer tube (6), such that a frictional, pressure connection with the at least one inner tube is effected by hardening the at least one outer tube (6).

5. Process in accordance with one of the above claims,
**characterized in that**
the at least one inner tube (5) is inserted into the at least one outer tube (6) while the at least one outer tube (6) is still in the pliable state.

6. Process in accordance with at least one of the preceding claims,
**characterized in that**
the at least one outer tube (6) is hardened by cooling to reduce its size in order to get a frictional, pressure connection with the at least one inner tube (5).

7. Process in accordance with at least one of the preceding claims,
**characterized in that**
the at least one outer tube (6) is cut to a set length while it is still in the pliable state.

8. Process in accordance with at least one of the preceding claims,
**characterized in that**
the at least one inner tube (5) is bent into a set form before being cased in the at least one outer tube (6).

9. Process in accordance with at least one of the preceding claims 1 to 7,
**characterized in that**
the at least one inner tube (5), after it has been cased in the at least one outer tube (6), is bent, together with the outer tube (6), into a set form, while the at least one outer tube (6) is still in a pliable state.

10. Process in accordance with at least one of the preceding claims,
**characterized in that**
the at least one outer tube (6) is welded fast to a connection flange and/or an associated section of an automobile body.

11. Process in accordance with at least one of the preceding claims,
**characterized in that**
the at least one inner tube (5) is preheated to a set temperature before casing in the at least one outer tube (6).

12. Process in accordance with at least one of the preceding claims,
**characterized in that**
the at least one outer tube (6) is extruded directly by means of the at least one inner tube (5).

## Revendications

1. Procédé pour la fabrication d'un tube (5, 6) hybride se composant d'au moins un tube intérieur (5) en un premier matériau et d'au moins un tube extérieur (6) en un second matériau avec les étapes de procédé suivantes consistant à :
fabriquer l'au moins un tube intérieur (5) avec un profilé prédéterminé dans un état présentant une rigidité élevée ;
fabriquer l'au moins un tube extérieur (6) au moyen d'un procédé d'extrusion avec un profil adapté au profil prédéterminé de l'au moins un tube intérieur (5) dans un état facilement déformable, non durci ;
envelopper l'au moins un tube intérieur (5) rigide par l'au moins un tube extérieur (6) non durci, extrudé au moyen d'une étape de procédé intégrée au procédé d'extrusion ; et
durcir l'au moins un tube extérieur (6) pour une réduction des dimensions de l'au moins un tube extérieur (6) pour la liaison par serrage à force de celui-ci avec l'au moins un tube intérieur (5).

2. Procédé selon la revendication 1, **caractérisé en ce que** l'au moins un tube intérieur (5) est fabriqué en acier ou similaire.

3. Procédé selon la revendication 1 ou 2, **caractérisé en ce que** l'au moins un tube extérieur (6) est extrudé en aluminium, en un alliage d'aluminium ou similaire.

4. Procédé selon au moins l'une quelconque des revendications précédentes,
**caractérisé en ce que**
l'au moins un tube extérieur (6) est fabriqué avec un profil de section transversale qui présente, pour garantir une insertion de l'au moins un tube intérieur (5) dans l'au moins un tube extérieur (6), des dimensions appropriées de telle sorte que, par le durcissement de l'au moins un tube extérieur (6), une liaison par serrage à force de celui-ci avec l'au moins un tube intérieur (5) soit réalisée.

5. Procédé selon au moins l'une quelconque des revendications précédentes,
**caractérisé en ce que**
l'au moins un tube intérieur (5) est inséré dans l'au moins un tube extérieur (6), alors que l'au moins un tube extérieur (6) se trouve encore à l'état pâteux.

6. Procédé selon au moins l'une quelconque des revendications précédentes,
**caractérisé en ce que**
l'au moins un tube extérieur (6) est durci par refroidissement pour une réduction des dimensions de celui-ci pour la liaison par serrage à force avec l'au moins un tube intérieur (5).

7. Procédé selon au moins l'une quelconque des revendications précédentes,
**caractérisé en ce que**
l'au moins un tube extérieur (6) encore à l'état pâteux est coupé à une longueur prédéterminée.

8. Procédé selon au moins l'une quelconque des revendications précédentes,
**caractérisé en ce que**
l'au moins un tube intérieur (5) est déjà préplié dans une forme prédéterminée avant un enveloppement par l'au moins un tube extérieur (6).

9. Procédé selon au moins l'une quelconque des revendications 1 à 7,
**caractérisé en ce que**
l'au moins un tube intérieur (5) est plié après un enveloppement de celui-ci par l'au moins un tube extérieur (6) conjointement avec le tube extérieur (6) dans une forme prédéterminée, alors que l'au moins un tube extérieur (6) se trouve encore à l'état pâteux.

10. Procédé selon au moins l'une quelconque des revendications précédentes,
**caractérisé en ce que**
l'au moins un tube extérieur (6) est solidement soudé avec une bride de raccordement et/ou une partie de carrosserie associée d'un véhicule automobile.

11. Procédé selon au moins l'une quelconque des revendications précédentes,
**caractérisé en ce que**
l'au moins un tube intérieur (5) est préchauffé à une température prédéterminée avant un enveloppement par l'au moins un tube extérieur (6).

12. Procédé selon au moins l'une quelconque des revendications précédentes,
**caractérisé en ce que**
l'au moins un tube extérieur (6) est directement extrudé sur l'au moins un tube intérieur (5).
